# EUROPEAN PATENT SPECIFICATION

(11) **EP 0 321 073 B1**
(45) Date of publication and mention of the grant of the patent: **26.01.1994**
(21) Application number: 88309129.0
(22) Date of filing: 30.09.1988
(51) Int. Cl.: G02F 1/133

(54) **Liquid crystal display device**
Flüssigkristall Anzeigevorrichtung
Dispositif d'affichage à cristal liquide

(30) Priority: 18.12.1987 JP 322257/87
(43) Date of publication of application: 21.06.1989
(73) Proprietor: SHARP KABUSHIKI KAISHA, Osaka 545 (JP)
(72) Inventor: Mitsumune, Toshifumi, Kobe-shi Hyogo-ken (JP); Take, Hiroshi, Ikoma-shi Nara-ken (JP); Nakazawa, Kiyoshi, Fujiidera-shi Osaka (JP)
(74) Representative: Brown, Kenneth Richard

(56) References cited:
- EP-A- 0 031 143
- FR-A- 2 571 913

## Description

The present invention relates to a liquid crystal display device, specifically to an active-matrix liquid crystal display device in which a plurality of thin film transistors for driving the pixels thereof are connected to transparent electrodes which form the pixels.

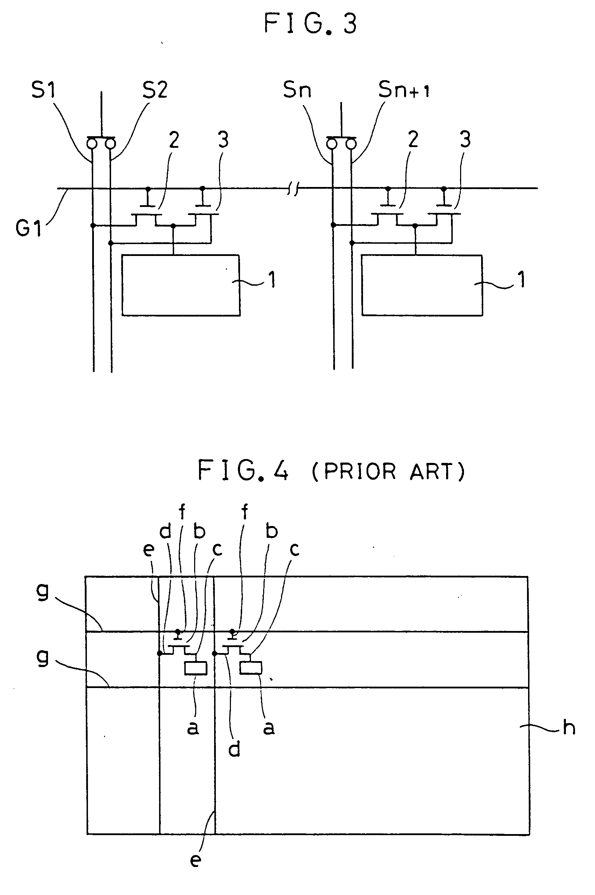

In a conventional active-matrix liquid crystal display device, as shown in Fig. 4, one thin film transistor b for driving each pixel is respectively connected to each of the transparent electrodes a (indium tin oxide) arranged in a matrix fashion to form each pixel. The drain electrode c of the thin film transistor b is connected to the transparent electrode a, the source electrode d of the transistor b is connected to a common source electrode line e on each column of the matrix, and the gate electrode f of the transistor b is connected to a common gate electrode line g on each row of the matrix. The above-described transparent electrodes a, thin film transistors b, source electrode lines e on each column, and gate electrode lines g on each row are formed on an insulating substrate h.

In the liquid crystal display device having the above-mentioned structure, the characteristic inspection of the thin film transistor b is conducted by bringing a needle-shaped probe into contact (pressure contact) with the transparent electrode a of the pixel which is connected to the drain electrode c of the thin film transistor b, and a voltage is applied to the source electrode d, which is not less than a threshold voltage applied to the gate electrode f, and the resulting current flow into the transparent electrode a is measured.

However, with the inspection method described above, it is difficult to test all of the thin film transistors because of the presence of narrow pitches of the transparent electrodes a and because of the large number of pixels. In addition, the contact of the needle-shaped probe and the transparent electrode of the pixel is prone to damage the thin film transistor b, and in the case of a colour liquid crystal display device, in inspecting the characteristics of the thin film transistor b, a defect in the pixel has been judged to have occurred by performing black-and-white display, and therefore the manufacturing cost has been high.

Also, in JP-A-61-249078, a matrix-type display device is described wherein two thin film transistors are provided for one pixel electrode, and a bypass is disposed in the source electrode line. Either of the thin film transistors is utilized for a method of correcting a defect caused by a short-circuit between the gate electrode line and the source electrode line, a short-circuit between the source electrode and the drain electrode, a short-circuit between the gate electrode and the drain electrode, or a break between the drain electrode and the pixel electrode; thereby the reliability of the display device can be secured.

However, in the matrix-type display device as shown in JP-A-61-249078, when a defective thin film transistor is separated from the pixel electrode by etching or laser cutting, this results in greater time lost and higher costs required for inspection and correction, especially in mass-production.

The present invention has been achieved in the light of the above-mentioned circumstances, and has as its purpose to provide a liquid crystal display device which will allow characteristic inspection of the thin film transistor for driving a pixel without damaging the thin film transistor.

From EP-A-0 031 143, it is known to provide two or more transistors for driving a pixel element and to connect these transistors to bus lines extending on both sides of a picture electrode thereof. This arrangement is disadvantageous because bus lines driving different pixel elements come to be adjacent one another, which gives rise to cross-talk problems. Furthermore, a short-circuit may develop between the adjacent bus lines.

In one aspect, the invention provides a liquid crystal display device comprising:
a plurality of pixel elements arranged in a matrix of rows and columns, each pixel element comprising a transparent pixel electrode and at least two thin film transistors whose drain terminals are commonly connected to the pixel electrode;
a plurality of gate lines, each one line being arranged for each row or column of the matrix; and
a plurality of groups of source lines, each group being arranged for each column or row of the matrix, each group comprising a number of source lines equal to the number of said thin film transistors of the pixel element, wherein:
each pixel element is connected to a respective combination of one of said gate lines and one of said groups of source lines by the gate terminals of its said thin film transistors which are commonly connected to said one gate line and by the source terminals of its said thin film transistors which are separately connected to the source lines of said one group; and
each group of source lines lies to one side of the column or row of pixel elements to which it is connected.

The transparent electrode is preferably an indium tin oxide film which is formed by a physical method such as electron beam evaporation, resistance heat evaporation or sputtering, or by a chemical method such as spraying or the CVD method.

Also, for the thin film transistor, a semiconductor material such as polycrystalline silicon, amorphous silicon, Te or CdSe is used, and may be fabricated by a conventional method in this field.

Furthermore, the gate lines and the source lines are preferably formed with metals such as Ta, Mo, Ti or Al.

The gate lines are preferably disposed in the vicinity of the transparent pixel electrodes in parallel to the row direction of the matrix and the source lines are preferably disposed in the vicinity of the transparent pixel electrodes in parallel to the column direction. Here, the word vicinity as is commonly understood in the field refers to the necessary spacing between the transparent electrodes and the gate and source lines.

In another aspect, the invention provides a method of testing a liquid crystal display device, said device comprising a plurality of pixel elements, each including a transparent electrode and at least first and second thin film transistors, the sources of each of the first and second thin film transistors being separately connected to first and second source lines, their drains being commonly connected to the transparent electrode, and their gates being commonly connected to a gate line so that the first and second transistors provide a path interconnecting the first and second source lines when the transistors are in their conductive state, the method comprising the steps of:
energizing said gate line to render the transistors conductive;
applying a voltage across said first and second source lines;
measuring a current passing through said first and second source lines under the condition that at least one of said source lines is connected to ground through an amperemeter; and
comparing the measured current with a predetermined value corresponding to said transistors in the conductive state.

Fig. 1 is a fragmental structural schematic view showing a wiring structure of an embodiment in accordance with the present invention.

Fig. 2 is an electric wiring diagram for explaining a method of inspecting the characteristics of a thin film transistor of the embodiment.

Fig. 3 is a fragmental structural schematic view showing the final connection structure of the source electrode lines of the embodiment.

Fig. 4 is a partial structural schematic view of prior art.

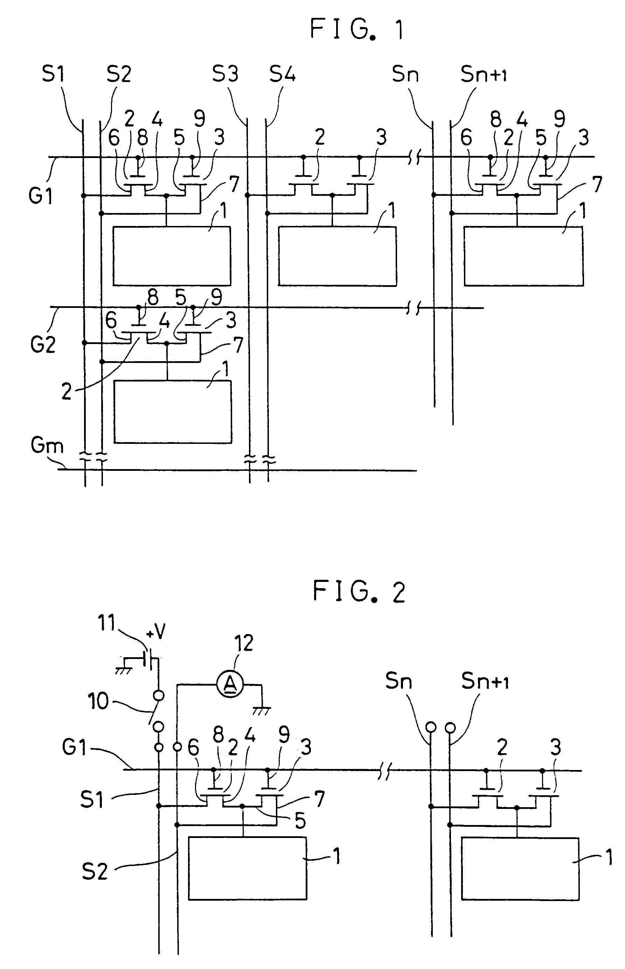

In Fig. 1, numeral 1 designates transparent electrodes, which are disposed on an insulating substrate (not illustrated), for example, a glass substrate, in a matrix fashion to form a plurality of pixels. For the transparent electrode 1, an ITO (indium tin oxide) film is preferable.

Connected to each transparent electrode 1, are each of the drain electrodes 4 and 5 and a plurality of, for example, two thin film transistors 2 and 3 for the driving pixel made and disposed on the insulating substrate by a conventional method in this field. Also, the source electrodes 6 of the thin film transistors 2 in the direction of the same column are connected to one common source electrode line S1, and the source electrodes 7 of the thin film transistors 3 are connected to a source electrode line S2. Similarly, the respective thin film transistors 2 and 3 in the column direction of the n-th column are connected to source electrode lines Sn and Sn+1, respectively. This means that the number of source electrode lines per column of pixels is equal to the number of thin film transistors connected to one transparent electrode. The source electrode lines are formed on the insulating substrate in a manner capable of connecting the respective source electrodes 6 and 7 to an exterior circuit which will be described later. Each of the source electrode lines S1, S2, ..., Sn, Sn+1 is disposed in the vicinity of a column constituted by the respective transparent electrodes 1 which run parallel to the direction of that column, with the width separation preferably about 10 - about 15 µm.

Furthermore, the gate electrodes 8 and 9 of the respective transistors 2 and 3 arrayed in the direction of the same row are connected to one of the gate electrode lines G1, G2, ..., Gm which are disposed on each row in the vicinity of the respective transparent electrodes 1 which run parallel to the gate electrode lines. Accordingly, the respective source electrode lines S1, S2, ..., Sn, Sn+1 are orthogonal to the respective gate electrode lines G1, G2, ..., Gm.

The respective thin film transistors 2 and 3 are formed between the transparent electrodes 1 of the respective rows and the gate electrode lines G1, G2, ..., Gm of the respective rows.

Next, a method of inspecting characteristics of the thin film transistors 2 and 3 in this embodiment is described with reference to Fig. 2.

As shown in Fig. 2, a voltage for driving thin film transistors is applied from an exterior circuit to the gate electrode line G1 which is connected to the gate electrodes 8 and 9 of the thin film transistors 2 and 3 to be tested. At this location on the first column, a power source 11 of a voltage of +V is connected to the source electrode line S1 through an external switch 10. Then, an amperemeter 12 is connected to the source electrode line S2.

In the above-mentioned state, if the thin film transistors 2 and 3 are normal, a current flows from the source electrode 6 to the drain electrode 4 of the thin film transistor 2, and further flows from the drain electrode 5 to the source electrode 7 of the thin film transistor 3. Accordingly, the amperemeter 12 connected to the source electrode line S2 should indicate a predetermined current value. In contrast to the above-mentioned situation, if either or both of the thin film transistors 2 and 3 are defective, the amperemeter 12 does not indicate the predetermined current value, and therefore the abnormal (defective) thin film transistors 2 and/or 3 are detected.

Similarly, testing the thin film transistors 2 and 3 of the first column can be conducted by applying the voltage for driving thin film transistors applied to the gate electrode line G1 sequentially to the gate electrode lines G2, ..., Gm from the above-mentioned state of connection in a switching-over fashion. Furthermore, the power source 11 and the amperemeter 12 are connected to the respective source electrode lines S3, S4, ..., Sn, Sn+1 in a sequential switching-over fashion, and as mentioned above, the voltage for driving thin film transistors is applied to the gate electrode lines G1, G2, ..., Gm in a sequential switching-over fashion. Thereby the characteristic inspection of all the thin film transistors 2 and 3 can be conducted.

As shown in Fig. 3, after completing the characteristic inspection, two of the source electrode lines S1, S2, S3, S4, ..., Sn, Sn+1, which form a pair on each column, are short-circuited, and thereby two thin film transistors 2 and 3 for the driving pixel are connected to one transparent electrode.

In addition, in the above-mentioned embodiment, the case with two thin film transistors is described, but the number of the thin film transistors may be three or more, and in this case, the drain electrodes of the respective transistors are connected commonly to the transparent electrode, and the source electrodes are connected separately to the source electrode lines. Then, in conducting the characteristic inspection of the thin film transistor, the voltage is applied to one source electrode line, and the amperemeters are connected to the rest of the source electrode lines, and thereby characteristics of a plurality of thin film transistors connected to one transparent electrode can be inspected by the same method.

Therefore, in accordance with the present invention, the testing of the thin film transistor for the driving pixel can be easily conducted without damaging the thin film transistor. If the characteristics of even one or more of the thin film transistors connected to one transparent electrode is at a certain level or greater, a liquid crystal display device can be made which does not produce a point defect and does not diminish the quality of its display.

The invention being thus described, it will be obvious that the same may be varied in many ways. Such variations are not to be regarded as a departure from the scope of the invention.

## Claims

1. A liquid crystal display device comprising:
a plurality of pixel elements arranged in a matrix of rows and columns, each pixel element comprising a transparent pixel electrode (1) and at least two thin film transistors (2,3) whose drain terminals (4,5) are commonly connected to the pixel electrode;
a plurality of gate lines (G1 - Gm), each one line being arranged for each row or column of the matrix; and
a plurality of groups of source lines (S1,S2; S3,S4;Sn,Sn+1), each group being arranged for each column or row of the matrix, each group comprising a number of source lines equal to the number of said thin film transistors of the pixel element, wherein:
each pixel element is connected to a respective combination of one of said gate lines (G1) and one of said groups of source lines (S1,S2) by the gate terminals (8,9) of its said thin film transistors which are commonly connected to said one gate line (G1) and by the source terminals (6;7) of its said thin film transistors which are separately connected to the source lines (S1;S2) of said one group; and
each group of source lines (S1,S2;S3,S4;Sn,Sn+1) lies to one side of the column or row of pixel elements to which it is connected.

2. A liquid crystal display device in accordance with claim 1, wherein the transparent pixel electrode (1) comprises an indium tin oxide film.

3. A liquid crystal display device in accordance with claim 1 or claim 2, wherein the gate lines (G1 - Gm) extend parallel to the row direction of the matrix and the source lines (S1 - Sn+1) extend parallel to the column direction of the matrix.

4. A method of testing a liquid crystal display device, said device comprising a plurality of pixel elements, each including a transparent electrode (1) and at least first and second thin film transistors (2,3), the sources (6,7) of each of the first and second thin film transistors being separately connected to first and second source lines (S1,S2), their drains (4,5) being commonly connected to the transparent electrode, and their gates (8,9) being commonly connected to a gate line (G1) so that the first and second transistors provide a path interconnecting the first and second source lines when the transistors are in their conductive state, the method comprising the steps of:
energizing said gate line (G1) to render the transistors (2,3) conductive;
applying a voltage across said first and second source lines (S1,S2);
measuring a current passing through said first and second source lines under the condition that at least one of said source lines is connected to ground through an amperemeter; and
comparing the measured current with a predetermined value corresponding to said transistors in the conductive state.

## Patentansprüche

1. Flüssigkristall-Anzeigevorrichtung mit:
- mehreren Pixelelementen, die in einer Matrix von Zeilen und Spalten angeordnet sind, wobei jedes Pixelelement eine durchsichtige Pixelelektrode (1) und mindestens zwei Dünnfilmtransistoren (2, 3) aufweist, deren Drainanschlüsse (4, 5) gemeinsam an die Pixelelektrode angeschlossen sind;
- mehreren Gateleitungen (G1 - Gm), wobei jede Leitung für jede Zeile oder Spalte der Matrix angeordnet ist; und
- mehreren Gruppen von Sourceleitungen (S1, S2; S3, S4; Sn, Sn+1), wobei jede Gruppe für jede Spalte oder Zeile der Matrix angeordnet ist und jede Gruppe eine Anzahl von Sourceleitungen aufweist, die der Anzahl der Dünnfilmtransistoren des Pixelelements entspricht; wobei:
- jedes Pixelelement mit einer jeweiligen Kombination einer der Gateleitungen (G1) und einer der Gruppen der Sourceleitungen (S1, S2) durch die Gateanschlüsse (8, 9) des zugehörigen der Dünnfilmtransistoren, die gemeinsam an die eine Gateleitung (G1) angeschlossen sind, und durch die Sourceanschlüsse (6, 7) dieser Dünnfilmtransistoren verbunden ist, die getrennt mit den Sourceleitungen (S1; S2) der einen Gruppe verbunden sind; und
- wobei jede Gruppe von Sourceleitungen (S1, S2; S3, S4; Sn, Sn+1) auf einer Seite der Spalte oder Zeile von Pixelelementen liegt, an die sie angeschlossen ist.

2. Flüssigkristall-Anzeigevorrichtung nach Anspruch 1, bei der die durchsichtige Pixelelektrode (1) einen Indium-Zinn-Oxid-Film aufweist.

3. Flüssigkristall-Anzeigevorrichtung nach Anspruch 1 oder Anspruch 2, bei der sich die Gateleitungen (G1 - Gm) parallel zur Zeilenrichtung der Matrix und die Sourceleitungen (S1 - Sn+1) parallel zur Spaltenrichtung der Matrix erstrecken.

4. Verfahren zum Prüfen einer Flüssigkristall-Anzeigevorrichtung, die mehrere Pixelelemente aufweist, von denen jedes eine durchsichtige Elektrode (1) und mindestens einen ersten und einen zweiten Dünnfilmtransistor (2, 3) aufweist, wobei die Sourceanschlüsse (6, 7) des ersten und des zweiten Dünnfilmtransistors jeweils getrennt mit einer ersten und einer zweiten Sourceleitung (S1, S2) verbunden sind, die Drainanschlüsse (4, 5) gemeinsam an die durchsichtige Elektrode angeschlossen sind und die Gateanschlüsse (8, 9) gemeinsam an eine Gateleitung (G1) angeschlossen sind, damit der erste und der zweite Transistor einen Pfad bilden, der die erste und die zweite Sourceleitung miteinander verbindet, wenn die Transistoren sich im leitenden Zustand befinden, welches Verfahren folgende Schritte aufweist:
- Aktivieren der Gateleitung (G1), um die Transistoren (2, 3) in den leitenden Zustand zu überführen;
- Anlegen einer Spannung zwischen die erste und die zweite Sourceleitung (S1, S2);
- Messen eines Stroms, der durch die erste und die zweite Sourceleitung unter der Bedingung fließt, daß mindestens eine der Sourceleitungen über ein Amperemeter mit Masse verbunden ist; und
- Vergleichen des gemessenen Stroms mit einem vorgegebenen Wert, der demjenigen der Transistoren im leitenden Zustand entspricht.

## Revendications

1. Dispositif d'affichage à cristal liquide comprenant: une pluralité de pixels disposés dans une matrice de lignes et de colonnes, chaque pixel comprenant une électrode de pixel transparente (1) et au moins deux transistors à couche mince (2, 3) dont les bornes de drain (4, 5) sont habituellement connectées à l'électrode de pixel ;
une pluralité de lignes de grilles (G1 - Gm), chaque ligne étant disposée pour chaque ligne ou colonne de la matrice ; et
une pluralité de groupes de lignes de source (S1, S2 ; S3, S4 ; Sn, Sn+1), chaque groupe étant disposé pour chaque colonne ou ligne de la matrice, chaque groupe comprenant un nombre de lignes de source égal au nombre desdits transistors à couche mince du pixel, dans lesquels :
chaque pixel est connecté à une combinaison respective d'une desdites grilles (G1) et d'un desdits groupes de lignes de source (S1, S2) par les bornes de grille (8, 9) de ses transistors à couche mince qui sont habituellement connectés à ladite grille (G1) et par les bornes de source (6 ; 7) de ses transistors à couche mince qui sont connectés séparément aux lignes de source (S1 ; S2) dudit groupe ; et
chaque groupe de lignes de source (S1, S2 ; S3, S4 ; Sn, Sn+1) repose d'un côté de la colonne ou ligne d'éléments de pixel auquel il est connecté.

2. Dispositif d'affichage à cristal liquide selon la revendication 1, dans lequel l'électrode de pixel transparente (1) comprend une couche d'oxyde stannique d'indium.

3. Dispositif d'affichage à cristal liquide selon la revendication 1 ou la revendication 2, dans lequel les grilles (G1 - Gm) s'étendent parallèlement au sens de la ligne de la matrice et les lignes de source (S1 - Sn+1) s'étendent parallèlement au sens de la colonne de la matrice.

4. Procédé de test d'un dispositif d'affichage à cristalliquide, ledit dispositif comprenant une pluralité de pixels, chacun comprenant une électrode transparente (1) et au moins des premier et second transistors à couche mince (2, 3), les sources (6, 7) de chacun des premier et second transistors à couche mince étant connectés séparément aux première et seconde lignes de source (S1, S2), leurs drains (4, 5) étant habituellement connectés à l'électrode transparente, et leurs grilles (8, 9) étant habituellement connectées à une grille (G1) de sorte que les premier et second transistors fournissent un chemin reliant les première et seconde lignes de source lorsque les transistors sont dans leur état conducteur, le procédé comprenant les étapes suivantes :
exciter ladite ligne de grille (G1) afin de rendre les transistors (2, 3) conducteurs ;
appliquer une tension auxdites première et seconde lignes de source (S1, S2) ;
mesurer un courant passant par lesdites première et seconde lignes de source à la condition qu'au moins l'une desdites lignes de source soit reliée à la masse par l'intermédiaire d'un ampèremètre ; et
comparer le courant mesuré à une valeur prédéterminée correspondant auxdits transistors à l'état conducteur.
